# EUROPEAN PATENT APPLICATION

(11) **EP 2 001 230 A1**
(43) Date of publication of application: **10.12.2008**
(21) Application number: 07465002.9
(22) Date of filing: 05.06.2007
(51) Int. Cl.: H04N 7/173

(54) **Method for processing plurality of sets of content items in television receiver and system for processing plurality of sets of content items in television receiver**

(71) Applicant: ADVANCED DIGITAL BROADCAST S.A., 1218 Grand-Saconnex (CH)
(72) Inventor: Lazarski, Wojciech, Zielona Gora 65-001 (PL); Gajda, Marcin, Tuplice 68-219 (PL); Kolbuszewski, Krzysztof, Zielona Gora 65-012 (PL); Szajna, Tomasz, Drzonkow 66-004 (PL)
(74) Representative: Hudy, Ludwik

(57) **Abstract**

A system for processing and navigating within a plurality of sets of Web content items in a television receiver (101) offering a television-like user experience controllable by a remote controller (141) comprises a content dispatcher (119) configured to make accessible the plurality of sets of content items to the television receiver (101), a service identifiers collection (115) configured to store service identifiers corresponding to the sets, a service navigation interface (116) controllable by the remote controller (141) and configured to receive a service change request as well as a content presenter (120) controllable by the service navigation interface (116) and configured to receive a service display request for a chosen service identifier assigned to a chosen set, and to receive a number of content items of the chosen set and present the content items in a series, where each content item is presented for a period of time. In addition, the service navigation interface (116) is configured to send a service display request to the content presenter (120) for a new set associated with a new service identifier different than the current service identifier of the currently displayed set, responsively to a service change request.

## Description

The invention relates to a method and a system for processing a plurality of sets of content items in a television receiver.

A typical user interface of a television receiver is designed for a wide audience, covering experienced and inexperienced users. It usually allows navigation through broadcasted programs by using a remote controller having a plurality of numerical and functional buttons, via which users can easily change television channels and adjust viewing conditions such as volume or picture parameters. Such user interface allows passive viewing of television programs, namely after a program of interest has been selected, the user may sit and enjoy watching, without further interaction with the receiver.

Broadcasted television programs, along with broadcasted radio programs, have been a major source of multimedia content for a long time. In a recent decade, Internet became another important multimedia content source, offering both professional and amateur user-generated content in form of texts, images, video or audio clips. The content can be accessed through web pages on which it is presented, through specialized content aggregation sites or through search engines.

At first, Internet content was accessible only to personal computers users. Various user interfaces for content selection and navigation have been developed, basing on specific navigation methods of a personal computer, such as the use of mouse and keyboard.

Recent advances in television receivers, such as digital television set-top boxes or multimedia home centers made it possible for Internet content to be received and presented on the screen of a television set.

However, the conventional methods of content navigation known from personal computers, although possible to implement in television receivers, are not convenient for the majority of television receiver users.

One method of presenting a set of content items is a list of content-related metadata (such as the content title, source and parameters), from which the user may select the items to be viewed individually. For example, a list of image titles can be presented. Such interface is convenient to a personal computer user, who is accustomed to reading a lot of text fit on a computer screen. However, television viewers are not used to analyzing a lot of data and expect information to be displayed in a much simpler form.

Another method to present a set of content items, applicable especially to graphical content, is to provide a mosaic of content thumbnails, which are images or video of reduced size. The mosaic may allow quicker selection of an interesting item than a textual list. Due to small size of the thumbnails, such method is also applicable mainly for users of personal computers with a high-resolution screen. However, a television user is usually located at a distance from a television screen and is not able to analyze details of thumbnails.

Furthermore, there exists a problem of providing the user with a plurality of sets of content items, for example a plurality of search result lists or a plurality of thematic clusters being a result of a single search. A conventional approach known from personal computer interfaces is to present a plurality of windows, where each window corresponds to each set, or a plurality of tabs within one window, where the user may select a desired set by clicking on a tag assigned to this set. Such approach, when directly transferred to the television set, would require the conventional television remote controller to be expanded by additional buttons for switching between individual windows or tabs. Such interface would not be welcome by users not acquainted with personal computers.

Therefore, there exists a need to provide a method for processing content items in a television receiver that allows presentation of content for passive viewing in simple form, offering a television-like user experience.

The present invention provides a method for processing a plurality of sets of content items in a television receiver controllable by a remote controller. This method comprises following steps: making accessible the plurality of sets of content items to the television receiver, assigning a service identifier to each set of the plurality of sets, providing a service navigation interface controllable by the remote controller, receiving a number of content items of the chosen set and presenting the content items in a series, where each content item is presented for a period of time as well as executing a service display request for a new service identifier different than a current service identifier of a currently displayed set. The service navigation interface of this system is configured to receive a service change request. Upon receiving a service display request for a chosen service identifier assigned to a chosen set, the system receives a number of content items and upon receiving a service change request, the system executes a service display request for a new service identifier different than a current service identifier of a currently displayed set.

Service identifiers can form a subset of channel identifiers of the television receiver.

Preferably, the service navigation interface is configured to receive the service change request via a channel change input of the remote controller.

The service navigation interface can be configured to receive a service display request via a channel number input of the remote controller.

In one advantageous embodiment of the invention, the service navigation interface is further configured to receive a content rating input, and then, the method further comprises the step of storing the received content rating for a currently displayed content item upon receiving the content rating input.

Preferably, the method can comprise a step of rearranging a display order of content items of the chosen set in accordance to the received content rating inputs, which is executed upon receiving a service display request.

In further advantageous embodiment of the invention, the method comprises a further step of rearranging a display order of content items of the currently displayed set in accordance to the received content rating input, which is executed upon receiving the content rating input.

The method can further comprise the following steps of storing data identifying displayed content items and/or upon receiving a service display request, displaying a series of content items which are not identified as displayed content items.

The method can also comprise the following steps of storing data identifying displayed content items and/or upon receiving a service replay request, displaying series content items which are identified as displayed content items.

At user's option, the content items have the form of text, images, video or audio.

In addition, the idea of the invention is a computer program comprising program code means for performing all the steps of the above presented method when said program is run on a computer.

The idea of the invention is further a computer program product stored on a computer usable medium comprising computer readable program means which, when executed, causes a computer to perform all of the steps of the above described method.

The idea of the invention is also a system for processing a plurality of sets of content items in a television receiver controllable by a remote controller and provided with a display for presenting the sets of content items. This system comprises a content dispatcher configured to make accessible the plurality of sets of content items to the television receiver, a service identifiers collection configured to store service identifiers corresponding to the sets of content items, a service navigation interface controllable by the remote controller, the service navigation interface configured to receive a service change request and a content presenter, communicating with the service identifiers collection and with the content dispatcher, controllable by the service navigation interface, configured to receive a service display request for a chosen service identifier assigned to a chosen set, and to receive a number of content items of the chosen set and present the content items in a series, where each content item is presented on the display for a period of time. The service navigation interface of this system is configured to send a service display request to the content presenter for a new set associated with a new service identifier different than the current service identifier of the currently displayed set, responsively to a service change request.

The invention will now be described by way of an example and with reference to the accompanying drawings in which:
Fig. 1 presents a structure of the television receiver with a system according to the invention;
Fig. 2 presents a detailed structure of one embodiment of a content dispatcher;
Fig. 3 presents a detailed structure of another embodiment of a content dispatcher;
Fig. 4 presents one exemplary structure of a service ID collection;
Fig. 5 presents another exemplary structure of a service ID collection;
Fig. 6 presents an exemplary structure of a content set definitions container;
Fig. 7 presents a method of operation of a service display manager;
Fig. 8 presents an example of operation of the system; and
Figs. 9A - 9F present exemplary ways of presentation of content items.

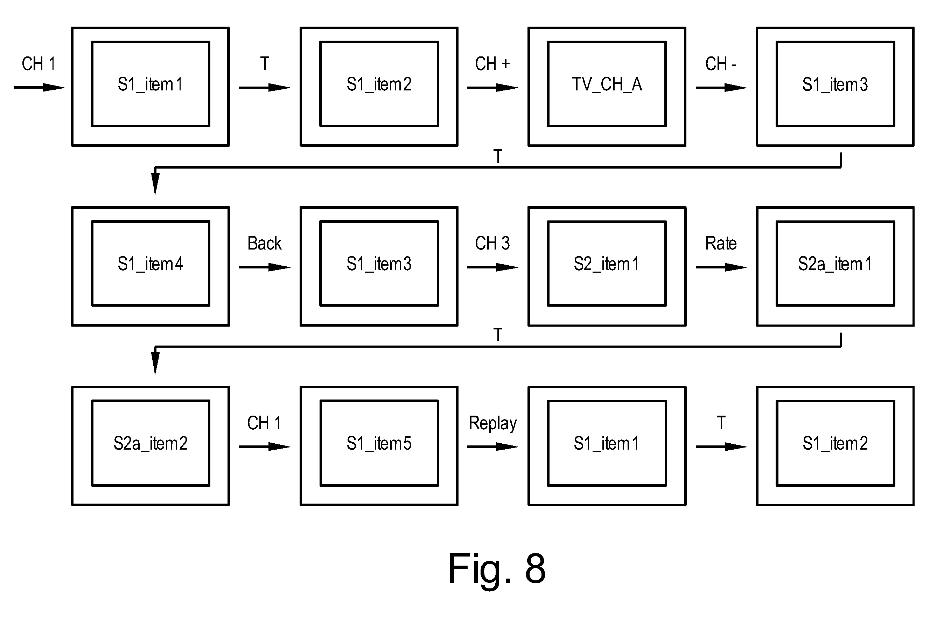

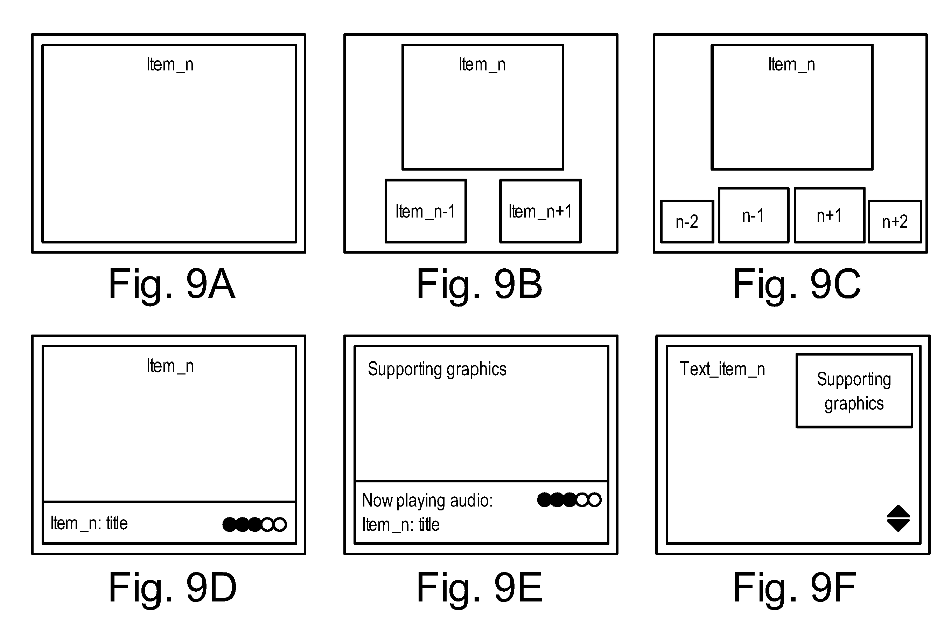

The present invention solves the problem of presentation of a plurality of sets of content items for passive viewing in simple form, offering a television-like user experience by presenting each content set as a separate service and providing a functionality to switch between the services, similar to switching between typical television channels. Thus, the user perceives each set of content items as a separate television channel and can navigate through the sets in a manner similar to navigation through television channels. In addition, the content items of a selected set are presented in series, where each content item is presented for a period of time, so that consecutive content items of the set are presented without a need for interaction from the user. Therefore, the user may perceive presentation of a set of content as a typical television channel, where content can be viewed passively, i.e. without need for interaction. The way in which the content sets can be navigated and in which the items are presented to the user is shown in details in Figs. 8 and 9A - 9F.

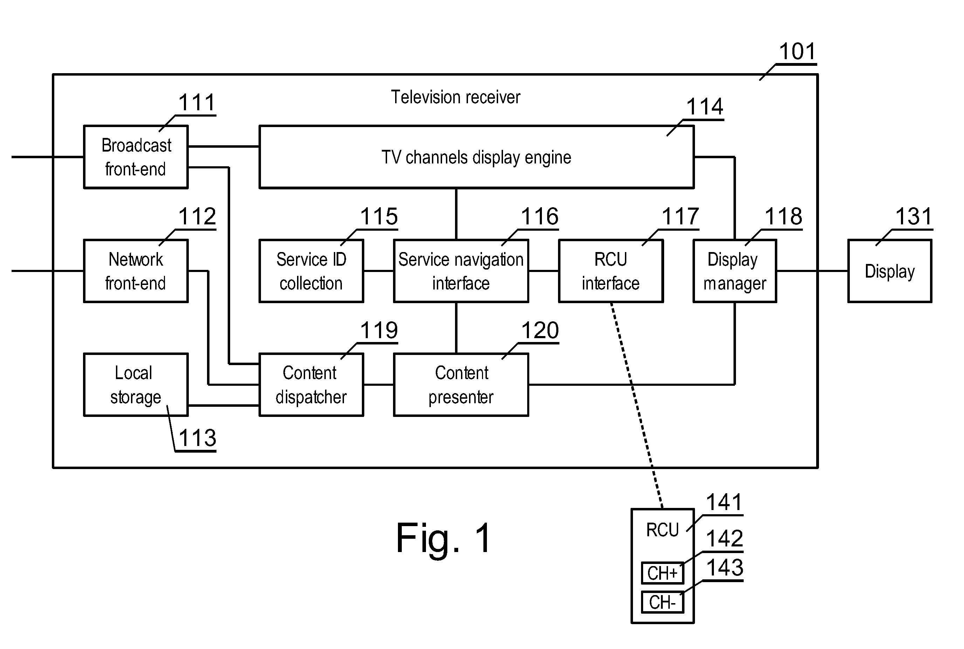

Fig. 1 presents a structure of a television receiver 101 with a system according to the invention. The television receiver 101 can be a stand-alone set-top box, a multimedia home center with TV reception functionality, a set-top box integrated with a television set or another device with TV reception functionality, such as a mobile phone or a personal digital assistant (PDA). The television receiver 101 has one or more content sources 111, 112, 113, allowing reception of television programming and access to content items. One content source can be a broadcast front-end 111 for receiving broadcast data from satellite, cable or terrestrial television network. The received broadcast data may include television channels as well as additional content, such as Internet content transmitted by a broadcast operator. Another content source can be a network front-end 112 for communicating with a local or wide area network, enabling access to Internet or other types of network providing content. A further content source can be a local storage 113, such as a hard disk or a non-volatile memory module, for storing content received from broadcast front-end or network front-end, from external devices connectable to the set-top box, such as digital cameras, or generated by the user within the set-top box.

The television receiver 101 further comprises a TV channels display engine 114, for receiving, decoding and descrambling television streams from at least one of the content sources. The TV channels display engine 114 is controllable by a remote control unit (RCU) 141, which is communicated via a RCU interface 117. The RCU 141 may have the form of a standard television remote controller with numerical and functional keys, or a form of a keyboard, a touch pad device, a voice input device, a three-dimensional navigation device or other form, suitable for control of the television receiver 101. The RCU 141 has at least a channel change input 142, 143, allowing the user to change the currently watched television channel. The output of the TV channels display engine 114 is fed to a display manager 118. The display manager 118 controls generation of both visual and audio data, which is sent to an audiovisual display 131, such as a television set, or to a set of a separate display screen and loudspeaker arrangement.

The system according to the invention comprises a number of blocks operable to process content items received from at least one content source for presentation to the user. The system is designed to process a plurality of sets of content items, so as to provide the user not only with a convenient navigation through one set of content items, but also a convenient method for navigating between content sets. Content sets may include content from various sources, for example Internet content, operator-generated broadcast content or user-own content stored locally. Each set is defined by a content set definition, which may specify a search query used to retrieve content from a search engine, or may directly specify a list of content items. The content items may have a form of text, images, audio or video clips and their variations, such as tables, graphs or multimedia objects.

Content items are presented on the display 131 by a content presenter 120. The content presenter 120 receives a number of content items of the chosen set from a content dispatcher 119 and presents the content items in such a way that the user perceives the presentation as another television channel. This is achieved by presenting content items in a series, where each content item is displayed for a period of time. In case of content having an audio or video form, the period of presenting each content item can equal the length of the audio or video clip, or a predefined period of time, for example ten seconds, to present only a preview of each content item. In addition, after each item is presented, the next content may be presented after a period of time, for example three seconds, to allow the user to rate the recently presented item. In case of content having a text form, the period of time of presentation may depend on the amount of the text to be presented, for example one second for each word. In case of content having a graphic form, the period of time of presentation may be predefined to a specific value, for example ten seconds. Furthermore, for all types of content, the period of time of content presentation may be selected individually for each content item by comparing content metadata and user preferences, so as to display content matching user preferences for a longer time than content unrelated to user preferences. Presenting content in such a way allows the user to passively view the content of a selected set, namely without the need to use the remote controller to switch between individual content items, which results in a viewing experience similar to viewing a typical television channel.

Content items belonging to one set may have the same form or different forms. For example, a content set may include both images and video clips. Then, content item in each form is presented according to a content presenter configuration for the particular content form, as shown in details in Figs. 9A - 9F.

As an additional feature, the content presenter 120 may be configured to receive items navigation requests via the remote controller 141, such as "back" or "forward" requests, resulting in presenting the item being previous or next on the list, which allows the user to watch a given again or skip viewing the currently displayed item.

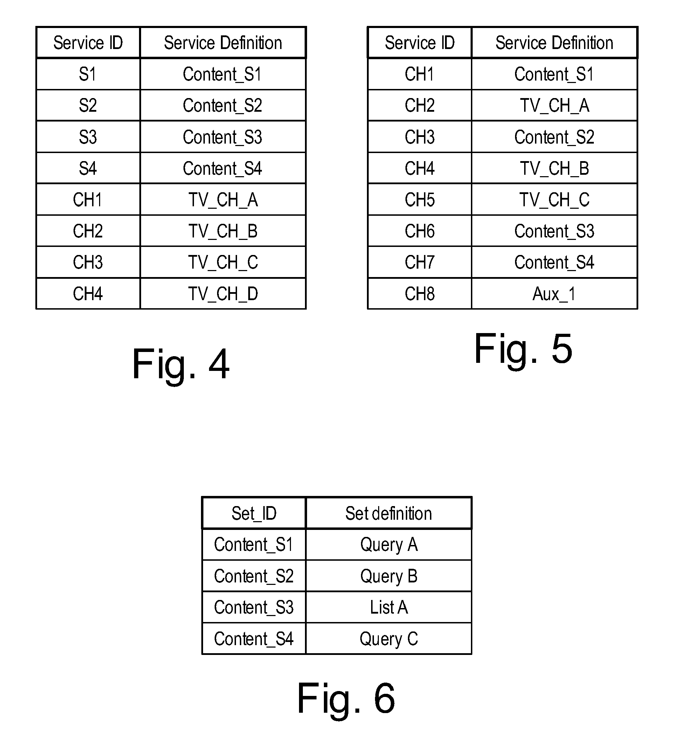

The sets of content items are identified by service identifiers, stored in a service identifiers collection 115. The service identifiers may form an individual collection of identifiers, as shown in Fig. 4, or may form a sub-collection of channel identifiers of the television receiver 101, as shown in Fig. 5. The user may navigate through the services by means of the RCU 141, by activating service change requests via the channel change inputs 142, 143.

The service change requests are handled by a service navigation interface 116, controllable by the remote control unit 141. The request input to the RCU is transmitted to the service navigation interface 116 via the RCU interface 117. In one embodiment, the service change request may be a "next" and/or "previous" service change request. In case the service identifiers form a sub-collection of channel identifiers of the television receiver 101, upon receiving a "next" service change request, the service navigation interface checks the identifier of the currently displayed service, reads an identifier of the next service from the channel identifiers collection and sends a request to display a given service to the content presenter or to the TV channels display engine, depending on the type of the service. In case the service identifiers form an individual collection of identifiers, upon receiving a "next" service change request, the service navigation interface scans content service identifiers only. In case of "previous" request, the service navigation interface changes the currently displayed service to a service previously displayed. In another embodiment, the service change request may specify directly a service identifier, for example a numerical value, in which case the service navigation interface 116 sends a request to display the service of the directly requested identifier.

The "next" and "previous" service change requests are activated via a channel change input of the remote controller, for example in case of a remote controller with a keypad - by the "CH+" 142 and "CH-" 143 keys, or by keys individually assigned to content set change functions.

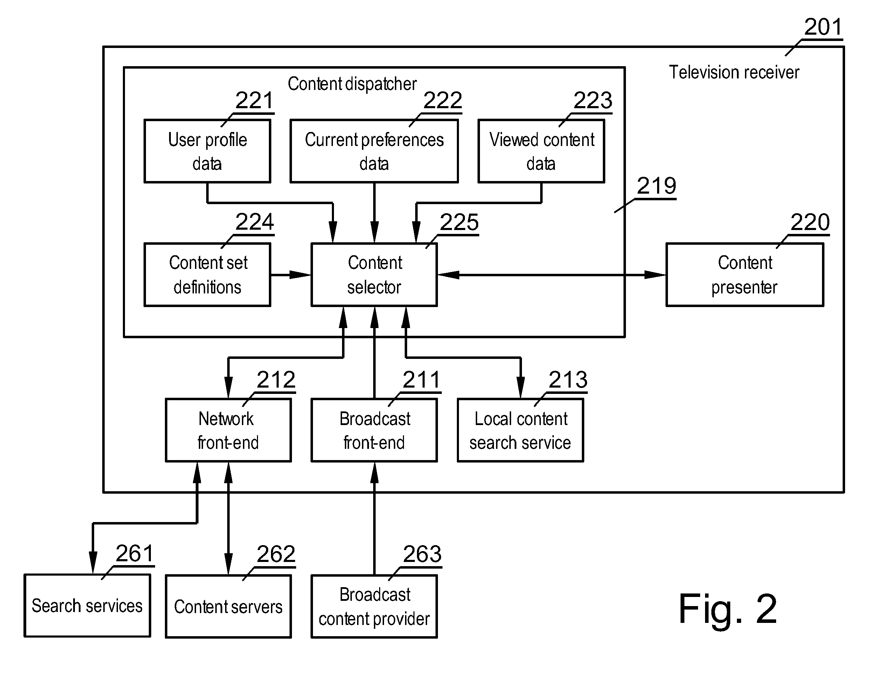

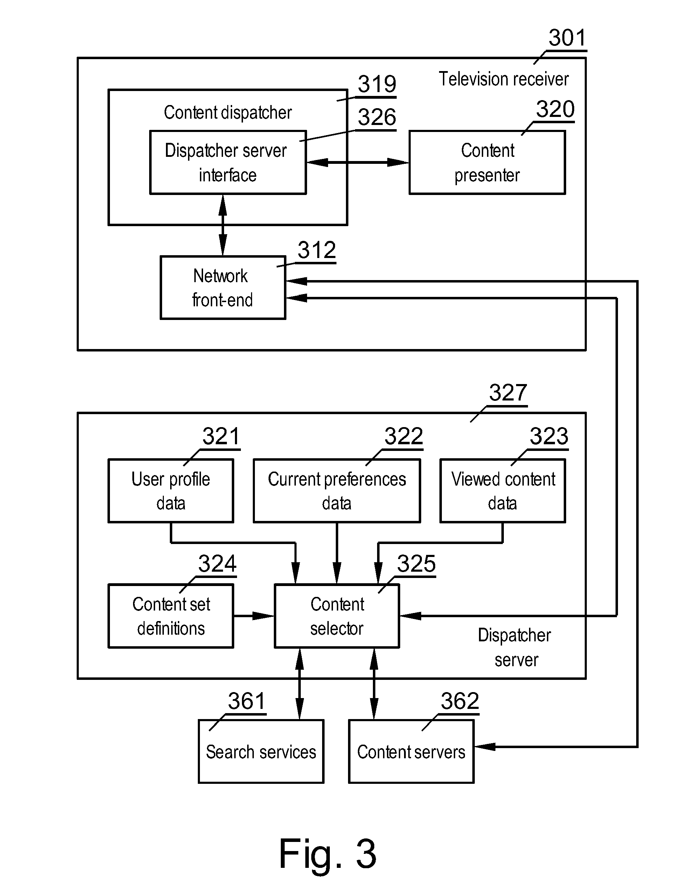

Content items of a chosen service are provided by the content dispatcher 119, described in more details on Figs. 2 and 3. In general, the content dispatcher 119 makes accessible the sets of content items to the receiver 101, by selecting and providing to the content presenter 120 content items of a content set corresponding to a chosen service identifier.

Fig. 2 shows a detailed structure of a content dispatcher 219 according to one embodiment of the invention, in which the whole functionality of the content dispatcher is embedded in the television receiver 201. The content dispatcher 219 may comprise a number of data containers 221, 222, 223, 224 allowing customized arrangement and selection of content items of a content set.

A content set definitions container 224 stores definitions in form of a list of content item identifiers or a search query, as shown in details in Fig. 6. The list of content item identifiers may be constructed by the user or retrieved from a remote source. The list includes locators of content items, for example in the form of URL (Universal Resource Locators), specifying location of content items in the Internet, in a broadcast stream or at a local storage. The search query defines a query to be sent to a search service to return a list of content item identifiers. The search query may be constructed by the user or retrieved from a remote source. It can specify the type of content to be retrieved and the search engines to which it should be sent.

A user profile data container 221 stores descriptors of user profile. For example, the user profile may comprise favorite keywords, parental control limitations, favorite content items, etc. The profile data may be individually created for the purpose of selection of content items by the system of the invention, or it can be integral with the general user profile data stored by the television receiver for the purpose of profiling television channels.

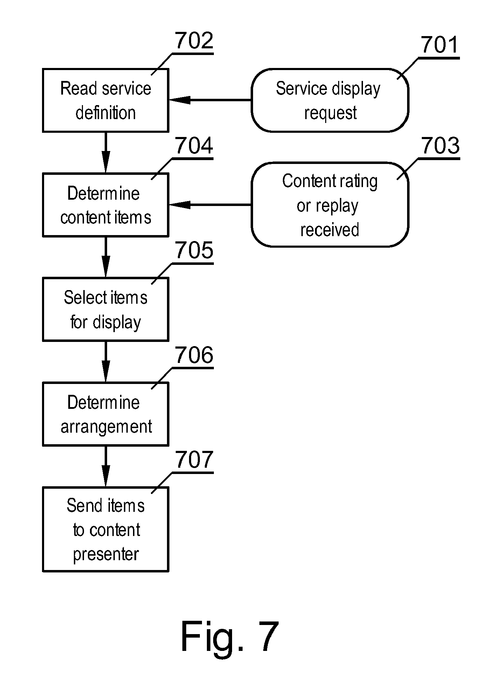

A current preferences data container 222 stores descriptors of current user preferences. It can be used to tailor selection of content items to current user needs and can be updated upon each selection of a new service or upon power-on of the television receiver. The current preferences data is particularly useful during content items selection in response to received user rating, as described in details in Fig. 7.

A viewed content data container 223 stores descriptors of content items already viewed by the user. It can be updated upon each selection of a new service or upon power-on of the receiver. Alternatively, it can store a longer history of content items viewed by the user, the history being limited by a particular period of time, for example one month, or by the size of the viewed content data container. The viewed content data container is particularly useful during service change, as described in details in Fig. 7.

A content selector 225 selects content items to be sent to the content presenter 220. The role of the content selector is to determine items belonging to a set assigned to a requested service, select items to be displayed, determine arrangement (order of presentation) of the items, retrieve the items and send them to the content presenter 220.

The content selector 225 communicates, via the network front-end 212, with search services 261 to execute search queries and retrieve content items lists, and with content servers to retrieve content items. The content selector may also receive, via the broadcast front-end 211, content set definitions and content items from a broadcast content provider 263. In addition, the content selector may also receive content set definitions and content items from the local content search service 213, enabling access to local content sources. The detailed procedure of operation of the content selector is presented in Fig. 7.

Fig. 3 shows a detailed structure of a content dispatcher 319 according to another embodiment of the invention, in which most of the functionality of the content dispatcher is assigned to a dispatcher server 327 external to the television receiver 301.

The content dispatcher 319 in the television receiver 301 comprises only a dispatcher server interface 326, configured to communicate with the dispatcher server 327 via a network interface, namely a network front-end 312. The dispatcher server interface 326 sends service request commands to the dispatcher server 327 and the dispatcher server 327 executes search queries and returns content item lists. The content dispatcher 319 may also send other communications, such as user rating of individual content items and user preferences update, in order to allow the dispatcher server 327 to adapt content to user preferences. The individual content items can be retrieved by the content dispatcher 319 via the content selector 325 which communicates with the content servers 362, or the content dispatcher may retrieve the items directly from the content servers 362.

The dispatcher server 327 is a networked server which may be operated by a single server computer or may operate as a distributed system of server computers. The functionality of individual modules, such as the content selector 325, the content set definitions container 324, the user profile data container 321, the current preferences data container 322 and the viewed content data container 323 is similar to that described in Fig. 2. The data containers comprise additional identification of a particular television receiver and its user to which these data relate.

The content selector 325 communicates with search services of the dispatcher server or other search services available in the network.

Other embodiments are possible, in which functional blocks of the content dispatcher will be distributed in various ways between the television receiver and the networked server. For example, a networked server may comprise only content selector and content set definitions container, and each television receiver will comprise individual user profile, current preferences and viewed content data containers. In yet another embodiment one content selector is present in the dispatcher server for communicating with networked search services, while each television comprises in addition an individual content selector for selecting content available from local storage and/or broadcast signals.

Fig. 4 presents an exemplary structure of a service ID collection 115 for television channels and content sets, where content sets have assigned service identifiers which form a list of identifiers separate from the channel list of the television set. In that case, the operation of the service navigation interface depends on the mode of operation of the television receiver - a content set mode, in which content sets are displayed or a TV channels mode, in which TV channels are displayed. Navigation via the channel change buttons effects in navigation only within the currently active type of services, namely content sets or television channels. Service identifiers S1 to S4 are assigned to content sets Content_S1 to Content_S4. Service identifiers CH1 to CH4 are assigned to TV channels TV_CH_A to TV_CH_D.

Fig. 5 presents an exemplary structure of a service ID collection 115 for television channels and content sets, where service identifiers of content sets form a subset of channel identifiers of the television receiver. In that case, the service interface upon request for service display reads service definition and sends request for service display either to the TV channels display engine or to the content presenter. Service identifiers CH1, CH3, CH6 and CH7 are assigned to content sets Content_S1, Content_S2, Content_S3 and Content_S4, respectively. Service identifiers CH2, CH4 and CH5 are assigned to television channels TV_CH_A, TV_CH_B and TV_CH_C, respectively. Service identifier CH8 is assigned to an auxiliary input, which can be handled by the TV channels display engine or other block of the television receiver.

Fig. 6 presents an exemplary structure of a content set definitions container 224, storing definitions of four content sets. The set Content_S1 is defined as a search query Query A, Content_S2 as Query B, Content_S4 as Query C. The set Content_S3 is defined as a list of content items List A.

Fig. 7 presents a procedure of operation of the content selector 225, 325. The procedure is activated in step 701 by receiving a service display request for a chosen service identifier, assigned to a chosen set. In step 702, the content selector 225, 325 reads definition of the chosen service from the service ID collection, the definition specifying a chosen content set, and then reads the definition of the chosen content set from the content set definitions container 224, 324. The content set definition may specify a search query or a list of content items. Next, individual items of the chosen set are determined in step 704. In case the content set definition includes a list, this step is omitted. In case the content set definition is a search query, the query is sent to a search service 261, 361 determined by the query or by user profile data. In response to the search query, the search service 261, 361 returns a list of content items. The content selector 225, 325 may read a list of all items returned by the search service, or a part of it and read a further part after the items already read have been displayed. Next, in step 705, the content selector 225, 325 selects the items to be displayed. The content selector 225, 325 may check if some items identifiers are stored in the viewed content data container 223, 323, so as to display only items already viewed or only new items. The content selector 225, 325 may also compare metadata of the content items and compare it with user profile data 221, 321 and current preferences data 222, 322 in order to filter out the content items not matching user profile, for example due to parental control rating. Next, in step 706, the content selector 225, 325 determines the arrangement of content items, i.e. the order in which they are to be presented to the user. The order may be determined for example on the basis of content rating specified by other users, by the date the content was generated, by subject, by degree of matching with user preferences. Next, the selected and arranged content items are read from the source specified by their locator and sent to the content presenter in step 707.

The step of omitting items already viewed by the user provides a particular advantage for the user, offering a television-like experience. When selecting a service already watched in the past, the content items already viewed are not presented for the second time, therefore the user always receives fresh content. As an alternative, the content selector 225, 325 may be configured to receive a replay request in step 703, and to respond by selecting items belonging to the set, which are recognized as already viewed. This is especially advantageous if the user wishes to replay favorite content items.

The step of determining content items of a requested service may be reactivated during display of a particular set of items upon reception of content rating by the user in step 703. The received content rating is added to user profile data and/or current preferences data. This may have impact on the contents of the search query and on the list of content items. Therefore, the search query is sent to a search service again so as to retrieve a new list of content items. Next, the content selection and arrangement steps can be also performed on the new list of content items. The above procedure can be executed each time a content rating is received or after a number of content ratings have been collected, for example rating of five content items, in order to minimize the number of search queries performed.

Fig. 8 presents an example of operation of the system, where the service identifiers form a subset of channel identifiers of the television receiver, accordingly to the structure of Fig. 5. After a request for display of chosen service, namely channel CH1, is received by the service navigation interface, it checks in the service ID collection whether the chosen service identifier CH1 relates to a television channel or a content set. The identifier CH1 relates to a content set S1, therefore the content set identifier Content_S1 is sent to a content presenter, which communicates with the content selector of the content dispatcher. The content selector reads definition of the chosen set S1 from a content set definitions container and, according to the procedure of Fig. 7, determines the first item to be presented - S1_item1. The item is passed to the content presenter and presented for a period of time T. Afterwards, the next item from the list is determined and presented - S1_item2. During presentation of that item, a service change request for the next service (CH+) is received by the service navigation interface. The service navigation interface determines in the service ID collection that the next service identifier is assigned to the television channel, therefore it executes a service display request at the TV services display engine for a new service identifier, namely CH2, which displays a channel associated with the identifier CH2 - TV_CH_A. After a request for a previous service is received (CH-), the service navigation interface executes a service display request for a new service identifier, namely CH1, which is assigned to the set S1. The content selectors checks content items which have been already displayed in the viewed content data collector and displays the first item from the list that was not yet displayed, namely S1_item3. After a period of time T, which may be different than the period of time of presentation of S1_item1, the item S1_item4 is presented. After a "back" request is received from the user, the previous item from the list is presented, namely S1_item3. After receipt of a user request for display of service CH3, the content navigation service determines that it relates to a content set, and passes control to the content presenter, which retrieves from the content dispatcher and presents item S3_item1. After a user rates the item S3_item1, the rating of the item is stored in the user profile and/or user preferences data container and the content items for set S3 are redefined, which results in the next items to be presented to be S3a_item1 and S3a_item2, where S3a is a list adapted to the current user preferences data. After the user requests display of service CH1, the next item of set S1 which has not yet been presented is processed by the content presenter, namely S1_item5. After the user requests replay of the content, the content selector reads from the viewed content data container identifiers of items of set S1 which have been already viewed and sends them to the content presenter, namely S1_item1, S1_item2, until S1_item5. As an option, after the rating for S3_item1 has been received, the presentation of sets other than S3 can be also adopted to rating received for set S3.

Figs. 9A-9D present exemplary ways of presentation of content items in form of images or video clips.

Fig. 9A presents an embodiment in which a single image or video clip is presented on a major part of the screen or on full screen. After the period of time for presentation of the item elapses, the next item is presented. Such a method of presentation provides most television-like experience to the user, which can passively watch consecutive images or video clips.

Fig. 9B presents an embodiment in which the current item is presented together with reduced-size versions of the previous and next items from the list. This method is useful for users who tend to use the "back" and "forward" functions to select the previous or next items.

Fig. 9C is a variation of the embodiment of Fig. 9B, where more than one item before and after the current item is shown in reduced size, in this example - two previous and two next items.

Fig. 9D presents an embodiment in which the item is presented on a major part of the screen together with an overlay window, presenting item metadata, such as the title, source or rating. In the presented example, there is overlay window includes a tile and rating shown as a number of colored symbols. The overlay window is displayed by the content presented responsively to a request for information received from the remote controller. The request can be activated by the "info" input of the remote controller, being the same button for requesting a display of an overlay window with information on the currently displayed television program, the so-called channel banner. Similar overlay window can be displayed for content having text and audio form as well.

Fig. 9E presents an exemplary way of presentation of a content item in form of audio clip with a window presenting the item metadata, such as the title. The remaining part of the screen can be left blank or supporting graphics can be displayed, such as a computer-generated animation or one or more text, image or video items. The supporting text, image or video items can be random or can be related to the audio item currently played. The related supporting items can be found by performing a search for content related to the metadata of the currently played audio clip.

Fig. 9F presents an exemplary way of presentation of a content item in form of text. The text is displayed in a major part of the screen or on full screen with a sufficiently large font to be readable by the user from a distance. If the amount of text does not fit the display window, it can be automatically scrolled until it ends and then switched to the next text item. The time of display and the speed of scrolling can be adjusted by each user and stored as a part of user profile data. A supporting graphics overlay window can be added, presenting random or related graphic items, similarly to supporting graphics for audio clips.

## Claims

1. A method for processing a plurality of sets of content items in a television receiver controllable by a remote controller, comprising the steps of:
- making accessible the plurality of sets of content items to the television receiver,
- assigning a service identifier to each set of the plurality of sets,
- providing a service navigation interface controllable by the remote controller, the service navigation interface configured to receive a service change request,
- upon receiving a service display request for a chosen service identifier assigned to a chosen set, receiving a number of content items of the chosen set and presenting the content items in a series, where each content item is presented for a period of time,
- upon receiving a service change request, executing a service display request for a new service identifier different than a current service identifier of a currently displayed set.

2. The method of claim 1, **characterized in that**
- service identifiers form a subset of channel identifiers of the television receiver.

3. The method of claim 1, **characterized in that**
- the service navigation interface is configured to receive the service change request via a channel change input of the remote controller.

4. The method of claim 1, **characterized in that**
- the service navigation interface is further configured to receive a service display request via a channel number input of the remote controller

5. The method of claim 1, **characterized in that**
- the service navigation interface is further configured to receive a content rating input,
and the method further comprises the step of,
- upon receiving the content rating input, storing the received content rating for a currently displayed content item.

6. The method of claim 5, further comprising the step of
- upon receiving a service display request, rearranging a display order of content items of the chosen set in accordance to the received content rating inputs.

7. The method of claim 5, further comprising the step of
- upon receiving the content rating input, rearranging a display order of content items of the currently displayed set in accordance to the received content rating input.

8. The method of claim 1, further comprising the steps of
- storing data identifying displayed content items,
- upon receiving a service display request, displaying a series of content items which are not identified as displayed content items.

9. The method of claim 1, further comprising the steps of
- storing data identifying displayed content items,
- upon receiving a service replay request, displaying a series content items which are identified as displayed content items.

10. The method of claim 1, wherein
- the content items have the form of text, images, video or audio.

11. A computer program comprising program code means for performing all the steps of the method of claims 1-10 when said program is run on a computer.

12. A computer program product stored on a computer usable medium comprising computer readable program means which, when executed, causes a computer to perform all of the steps of the method of claims 1-10.

13. A system for processing a plurality of sets of content items in a television receiver (101) controllable by a remote controller (141) and provided with a display (131) for presenting the sets of content items, **characterised in that** comprises
- a content dispatcher (119) configured to make accessible the plurality of sets of content items to the television receiver (101),
- a service identifiers collection (115) configured to store service identifiers corresponding to the sets of content items,
- a service navigation interface (116) controllable by the remote controller (141), the service navigation interface configured to receive a service change request,
- a content presenter (120), communicating with the service identifiers collection (115) and with the content dispatcher (119), controllable by the service navigation interface (116), configured to receive a service display request for a chosen service identifier assigned to a chosen set, and to receive a number of content items of the chosen set and present the content items in a series, where each content item is presented on the display (131) for a period of time,
- wherein the service navigation interface (116) is configured to send a service display request to the content presenter (120) for a new set associated with a new service identifier different than the current service identifier of the currently displayed set, responsively to a service change request.
